Europäisches Patentamt

European Patent Office

Office européen des brevets

(11) Publication number: **0 167 528 B1**

# EUROPEAN PATENT SPECIFICATION

(45) Date of publication of patent specification: **08.03.89**

(21) Application number: **84900578.0**

(22) Date of filing: **27.12.83**

(86) International application number:
**PCT/US83/02042**

(87) International publication number:
**WO 85/02884 04.07.85 Gazette 85/15**

(51) Int. Cl.⁴: **F 02 F 1/24, F 02 B 19/00, F 02 B 23/00**

(54) **CERAMIC HEAD FOR INTERNAL COMBUSTION ENGINE.**

(43) Date of publication of application:
**15.01.86 Bulletin 86/03**

(45) Publication of the grant of the patent:
**08.03.89 Bulletin 89/10**

(84) Designated Contracting States:
**DE GB**

(56) References cited:
**GB-A-1 510 267
US-A-2 845 919
US-A-4 277 539
US-A-4 341 826
US-A-4 426 966**

**PATENTS ABSTRACTS OF JAPAN, vol. 8, no.
57 (M-283)1494r, 15th March 1984; & JP-A-58
210 341 (NIPPON TOKUSHU TOGYO K.K.)
07-12-1983**

(73) Proprietor: **FORD MOTOR COMPANY LIMITED
Eagle Way
Brentwood Essex CM13 3BW (GB)**
(84) **GB**

(73) Proprietor: **FORD-WERKE
AKTIENGESELLSCHAFT
Ottoplatz 2 Postfach 21 03 69
D-5000 Köln 21 (DE)**
(84) **DE**

(72) Inventor: **HARTSOCK, Dale, L.
18745 Stamford
Livonia, MI 48152 (US)**

(74) Representative: **Messulam, Alec Moses et al
A. Messulam & Co. 24 Broadway
Leigh on Sea Essex SS9 1BN (GB)**

Courier Press, Leamington Spa, England.

## Description

The invention relates to head constructions for internal combustion engines and particularly to the use of ceramic elements in such engines.

In most heat engines, higher temperatures produce greater engine efficiency. However, the metals used in conventional internal combustion engines cannot withstand a significant increase in operating temperatures over that now used without affecting durability. But ceramics can withstand such higher temperatures and can help to retain the heat of combustion within the engine (to be extracted from the exhaust gas such as by turbocharging) to increase engine efficiency.

While ceramics have desirable high temperature properties, they generally have low material strength, distort under high temperatures, and can frequently fail or crack due to machining flaws introduced by shaping the ceramic, making their use in engines less than desirable. This is exemplified in recent government sponsored research work in Japan (see "From Japan's Labs: Ceramic Diesels", by John Hurtly, Popular Science, December, 1982, pages 94—96). In this research work, Kyoto Ceramic tried the use of silicon nitride as a flat plate to insulate the head, and silicon nitride for the entire piston, as well as for loose fitting parts such as tappets, push rod tips, and rocker arm pads. It was found that silicon nitride was not as good an insulator as some other ceramics, did not have a coefficient of thermal expansion close to conventional metal parts of an engine, and could not be fitted closely for high temperature applications. In addition, the use of only a plate of ceramic at the head permitted considerable heat to leak from the gases in the metal head passages. This same problem is presented by the disclosure of U.S. Patent 4,341,826.

NGK Spark Plug tried silicon nitride as the total material for critical components of the engine (such as the head, cylinder, piston, and crankshaft) and found that in components that received high stress, ceramic is at a disadvantage if it is the load receiving member. It is significant that the use of a ceramic head was not truly explored in this patent because the engine was of a two cycle type, inducting and exhausting gases through the cylinder wall and thus requiring only a plate of ceramic to close the cylinder. See "Ceramics Parts Take Shape", by John Hartly, Automotive Industries, September, 1982, pages 56—58. As with the effort of Kyoto Ceramic, the NGK effort failed to teach how a large mass of ceramic could be used as a head with internal hot gas passages; this is understandable since silicon nitride is difficult to fabricate in thick cross-sections due to the need to migrate nitrogen gas through the material during nitridation.

NGK Insulators is reputed, in the Popular Science article, to have employed stabilized zirconia as a blanket for insulating metal parts of the engine. No information is given as to how this may be facilitated, but it is offered that stabilized zirconia possesses a coefficient of thermal expansion which is 80% of cast iron, leaving an unsatisfactory differential if the ceramic is supported for sealing by the cast iron.

US—A—2,845,919 relates to an internal combustion engine of the type in which each cylinder is provided in the surface of the combustion chamber opposite to the piston with one or more ports serving for the discharge of the combustion products and being controlled by one or more values mounted in a valve casing located at the end of the cylinder. The valve casing forms a plug inserted into a barrel-shaped extension of the cylinder and clamped against an annular shoulder at the transition between said cylinder and said barrel by means of a cover and stay bolts anchored in the engine frame, bores leading into the combustion space for accommodating fuel valves, safety valve and indicator valve are carried transversely to the axial direction of the cylinder through the peripheral wall of the combustion space.

JP—A—5,821,034,1 relates to a cylinder head consisting of a nitriding silicon sintered body.

According to the invention there is provided a head assembly for an internal combustion engine having a cylinder block (11) with walls defining one or more bore openings (12) in each of which a piston (13) reciprocates, said assembly comprising; a body (16) having a side wall (20) and another wall fitting over said cylinder block to define with said piston and cylinder block a combustion chamber (17), said ceramic body (16) having passage means (18) through said body providing for flow of inducted combustion gases and compressed exhaust gases between said combustion chamber and said body side wall, shell means (15) sealingly clamping said ceramic body to said cylinder block and supportably carrying means (33) extending into said body (16) for controlling the flow of gases through said body, said shell means carrying at least part of the compressive loading imposed by said clamping characterised in that said body is a cast ceramic body (16) comprised of a material with a coefficient of the thermal expansion less than $1.8 \times 10^{-6}$ cm/cm/°C ($1.0 \times 10^{-6}$ in/in/°F) and wherein one or more compliant members (22) of high temperature resisting sealing material are placed between said shell means (15) and body (16) to accommodate a differential in coefficient of thermal expansion therebetween of between 1.8 to $21.6 \times 10^{-6}$ cm/cm/°C (1 to $12 \times 10^{-6}$ in/in/°F).

Preferably, the ceramic body is comprised of lithium aluminum silicate and has its smallest cross-sectional dimension no less than two inches (5 cm). Advantageously, the body has overall dimensions of height/width/length in the ratio range of 1:1:1 to 1:3:10.

Preferably, the shell means is comprised of a material which has a coefficient of thermal expansion differing from the coefficient of thermal expansion for said ceramic body by no greater than 3.6 to $21.6 \times 10^{-6}$ cm/cm/°C (2 to $12 \times 10^{-6}$ in/in/°F). Advantageously, the shell means is comprised of metallic members enveloping the ceramic body.

Preferably, the ceramic body has a wall defining a space for precombustion of inducted gases, and the means for controlling the flow of gases through the ceramic body comprises a precombustion apparatus extending through the shell means into the body and to the wall defining the precombustion space. A ceramic insulating member is advantageously placed between the ceramic body and at least a portion of the means for controlling flow (such as a valve stem). Means for fluidly cooling the insulating member may be employed (such means may include the use of pressurized oil directed between the insulating member and the valve stem).

The invention will now be further described with reference to the accompanying drawings in which:

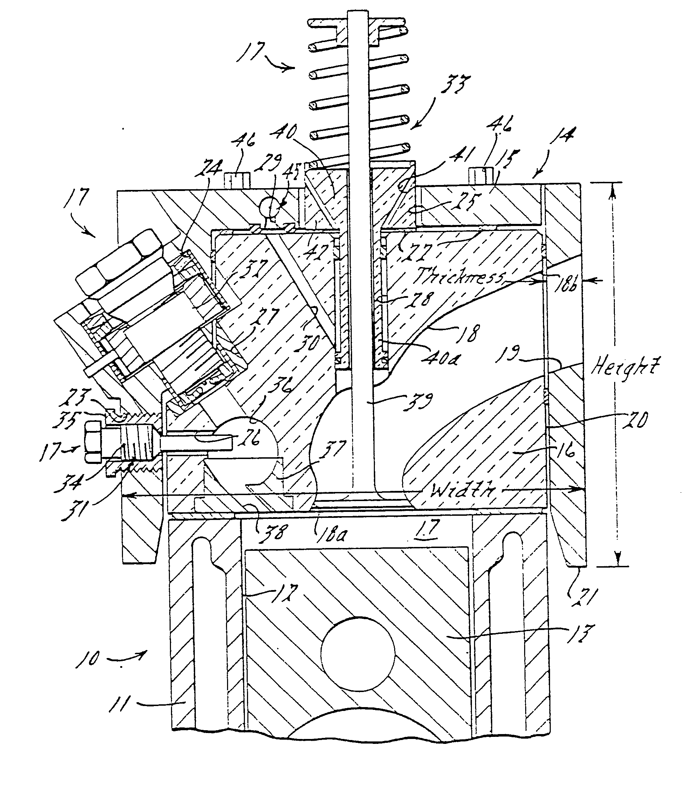

Figure 1 is a central sectional elevational view of an internal combustion engine incorporating the features of this invention and showing a piston and mechanical subassemblies associated with the engine.

Improved thermal efficiency for an engine is obtained by structuring the engine head of a massive thick ceramic body encased in a metallic shell, the compressive loads used to secure the head being distributed between the shell and body. The ceramic body is cast with elongated gas flow passages therethrough and of a low coefficient of thermal expansion material, lithium aluminum silicate, which material is not destructively affected by the sharp thermal gradient created by the hot gases.

As shown in Figure 1, the internal combustion engine 10 comprises essentially a cast iron block 11 with walls defining one or more bore openings or cylinders 12 therein to receive a conventional piston 13 reciprocally operating in the bore opening. A head assembly 14 is comprised of a cast ceramic body 16 and a metallic shell 15 carrying means 18 for controlling the flow of gases therethrough. The ceramic body fits over the cylinder block to define with the cast iron block 11 and piston 13 a combustion chamber 17.

Cast ceramic body

The ceramic body 16 is cast as a unitary solid of a material having a coefficient of thermal expansion less than $1.8 \times 10^{-6}$ cm/cm/°C ($1.0 \times 10^{-6}$ in/in/°F) and is easy to cast; the material is lithium aluminum silicate which has a coefficient of thermal expansion of up to $.36 \times 10^{-6}$ cm/cm/°C ($.2 \times 10^{-6}$ in/in/°F). The body is devoid of fluid cooling passages, but has passage means 18, here comprised of elongated internal channels which include one or more intake passages (as shown) and exhaust passages (not shown). One end 18a of each channel 18 is in communication with the bore opening 12 when the ceramic body 16 is in an aligned position thereover, and an opposite end 18b in a side wall 20 of the body; the opening 18b is in communication with a complimentary opening 19 in the metallic shell. The channels provide for conducting gases to or from the combustion chamber over an important length during which considerable heat is lost in conventional head assemblies. The ceramic body has its smallest cross-sectional dimension (height, length or width) no less than two inches and has overall dimensions of height/width/length in the ratio range of 1:1:1 to 1:3:10. The ceramic body contains preformed openings 27, 26, 28 and 30 aligned with the port openings of the skeleton, as will be described.

Metallic shell

Shell means 15 envelopes the ceramic body and sealingly clamps the body to the cylinder block. The compliant members act as localized seals, provide some insulation, and provide for some limited relative motion between the ceramic body and metallic shell due to a slight difference in the coefficient of thermal expansion of such materials, the latter being no greater than 1.8 to $21.6 \times 10^{-6}$ cm/cm/°C ($1-12 \times 10^{-6}$ in/in/°F). Advantageously, the compliant members provide for a spacing of .0025—.25 cm (.001—.10 inch). The shell means supportably carries means 18, extending into the body, for controlling the flow of gases through the ceramic body. The body is preferably formed from steel or cast iron plating having a coefficient of thermal expansion of about $10.8 \times 10^{-6}$ cm/cm/°C ($6.0 \times 10^{-6}$ in/in/°F) and having a thickness/width/height ratio of 1:6:6 to 1:30:30. The shell means forms an exterior skeleton for the body and is open at its bottom 21 to fit like an envelope about the ceramic body in spaced relationship. Spacing is maintained by use of one or more compliant members 22 therebetween. Compression bolts 46 may extend from threaded seats in the block 11, through the ceramic body or alongside the ceramic body, to bear against shoulders on the shell. Compression forces typically are about 40,000 pounds per cylinder for a three inch diameter bore opening.

The shell has port openings 23, 24 and 25 which communicate respectively with preformed openings 26, 27 and 28 extending through the ceramic body. Such port openings are adapted to sealingly receive mechanical subassemblies, including, respectively, ignition means 31, fuel injector means 32, and valve operating means 33. The latter mechanisms are threadably received in the port openings to hold and secure the subassemblies. The shell may also have an oil cooling delivery passage 29 aligned with an oil channel 30 defined in the ceramic.

The ignition means 31 for igniting the fuel and air in the combustion chamber 17 comprises a glow plug 34 carried by receptor 35 secured to the skeleton. The glow plug extends through opening 26 of the ceramic head block and into a prechamber 36. The precombustion chamber may have an independent ceramic member 37 (comprised of silica or silicon nitride) which is preshaped to complete said precombustion chamber with a nozzle channel 38 for directing a burning jet into the combustion chamber.

The fuel injector means 32 for metering fuel into the combustion chamber 17 comprises an injector assembly carried on a bias in the shell and aimed to send a fuel spray through stepped opening 27 into the precombustion chamber 36.

The valve operating means 33 for controlling the flow of gases through the ceramic body comprises a valve subassembly supported on the shell means. It comprises a spring biased valve with a valve stem 39 reciprocable (by use of a cam action, not shown) within a ceramic insulating sleeve 40. The sleeve 40 is a cylinder made of silicate, silicon nitride, silicon carbide, or zirconia, and has a portion 40a extending into the ceramic body in spaced relation and a portion 40b fitting and centered within the shell opening 25 by radial knobs 40c on the sleeve. Means for cooling the insulating sleeve comprise oil passages 41 which direct cooling fluid into the spacing between the sleeve 40 and the ceramic body 16.

## Claims

1. A head assembly for an internal combustion engine having a cylinder block (11) with walls defining one or more bore openings (12) in each of which a piston (13) reciprocates, said assembly comprising; a body (16) having a side wall (20) and another wall fitting over said cylinder block to define with said piston and cylinder block a combustion chamber (17), said ceramic body (16) having passage means (18) through said body providing for flow of inducted combustion gases and compressed exhaust gases between said combustion chamber and said body side wall, shell means (15) sealingly clamping said ceramic body to said cylinder block and supportably carrying means (33) extending into said body (16) for controlling the flow of gases through said body, said shell means carrying at least part of the compressive loading imposed by said clamping characterised in that said body is a cast ceramic body (16) comprised of a material with a coefficient of the thermal expansion less than $1.8 \times 10^{-6}$ cm/cm/°C ($1.0 \times 10^{-6}$ in/in/°F) and wherein one or more compliant members (22) of high temperature resisting sealing material are placed between said shell means (15) and body (16) to accommodate a differential in coefficient of thermal expansion therebetween of between 1.8 to $21.6 \times 10^{-6}$ cm/cm/°C (1 to $12 \times 10^{-6}$ in/in/°F).

2. An assembly as claimed in Claim 1, in which said ceramic body is comprised of lithium aluminum silicate.

3. An assembly as claimed in Claim 1 or 2, in which said shell means is comprised of metallic members enveloping said body.

4. An assembly as claimed in any one of Claims 1 to 3 in which said cast ceramic body has its small cross-sectional dimension no less than 5.08 cm (two inches).

5. An assembly as claimed in any one of the preceding claims, in which said means for controlling the flow of gases through said body comprises valve subassemblies supported on said shell means.

6. An assembly as claimed in Claim 5, in which said body has a wall defining a space for precombustion of inducted gases, said means for controlling the flow of gases through said body further comprising a precombustion apparatus extending through said shell means into said body and to said wall defining said precombustion space.

7. An assembly as claimed in Claim 6, which further comprises a ceramic insulating member placed between said body and a portion of the means for controlling the flow of gases through the body, and means for fluidly cooling said ceramic insulating member.

8. An assembly as claimed in Claim 7, in which said portion of the means for controlling the flow of gases comprises a valve stem, and said means for fluidly cooling comprises pressurized cooling oil directed between said insulating member and valve stem.

9. An assembly as claimed in any one of the preceding claims, in which said cast ceramic body has overall dimensions of height/width/length in the ratio range of 1:1:1 to 1:3:10.

## Patentansprüche

1. Kopfanordnung für einen Verbrennungsmotor, der einen Zylinderblock (11) bestizt, dessen Wände eine oder mehrere Bohrungsöffnungen (12) begrenzen, worin sich jeweils ein Kolben (13) hin- und herbewegt, besagte Anordnung umfassend einen Körper (16), der eine Seitenwand (20) hat und eine andere Wand, die besagtem Zylinderblock aufsitzt, um mit jenem Kolben und Zylinderblock eine Verbrennungskammer (17) zu begrenzen, wobei dieser keramische Körper (16) Leitungsmittel (18) aufweist, die durch diesen Körper gehen und eine Strömung angesaugter Verbrennungsgase und verdichteter Abgase zwischen besagter Verbrennungskammer und besagter Körperseitenwand erfolgen lassen, Gehäusemittel (15), die den keramischen Körper abdichtend an den Zylinderblock festklemmen und stützend Mittel (33) enthalten, die sich in den Körper (16) erstrecken, um die Strömung von Gasen durch diesen Körper zu regeln, wobei besagte Gehäusemittel mindestens einen Teil der Drucklast tragen, die durch die Klemmung verursacht wird, dadurch gekennzeichnet, daß besagter Körper ein gegossener keramischer Körper (16) ist, bestehend aus einem Werkstoff mit einem thermischen Ausdehnungskoeffizienten von weniger als $1,8 \times 10^{-6}$ cm/cm/°C ($1,0 \times 10^{-6}$ in/in/°F), und worin ein oder mehrere nachgiebige Elemente (22) aus hochtemperaturbeständigem Dichtungsstoff zwischen den Gehäusemitteln (15) und dem Körper (16) angeordnet sind, um dazwischen einen Unterschied des thermischen Ausdehnungskoeffizienten von 1,8 bis $21,6 \times 10^{-6}$ cm/cm/°C (1 bis $12 \times 10^{-6}$ in/in/°F) auszugleichen.

# EP 0 167 528 B1

2. Anordnung nach Anspruch 1, worin jener keramische Körper aus Lithiumaluminiumsilikat besteht.

3. Anordnung nach Anspruch 1 oder 2, worin jene Gehäusemittel aus Metallteilen bestehen, die besagten Körper umgeben.

4. Anordnung nach einem der Ansprüche 1 bis 3, worin die Kleinquerschnittsabmessung jenes gegossenen keramischen Körpers nicht weniger als 5,08 cm (2 Zoll) beträgt.

5. Anordnung nach einem der vorhergehenden Ansprüche, worin besagte Mittel zur Regelung der Strömung von Gasen durch besagten Körper Ventil-Untergruppen umfassen, die von den Gehäusemitteln gestützt werden.

6. Anordnung nach Anspruch 5, worin besagter Körper eine Wand aufweist, die einen Raum zur Vorverbrennung angesaugter Gase begrenzt, wobei jene Mittel zur Regelung der Strömung von Gasen durch besagten Körper weiterhin eine Vorverbrennungsvorrichtung umfassen, die sich durch die Gehäusemittel in den Körper und zu jener Wand erstreckt, die den Vorverbrennungsraum begrenzt.

7. Anordnung nach Anspruch 6, weiterhin enthaltend ein keramisches Isolierelement, das zwischen jenem Körper und einem Teil der Mittel zur Regelung der Strömung von Gasen durch den Körper angeordnet ist, sowie Mittel zur Flüssigkeitskühlung dieses keramischen Isolierelementes.

8. Anordnung nach Anspruch 7, worin besagter Teil der Mittel zur Regelung der Strömung von Gasen einen Ventilschaft umfaßt, und besagte Mittel zur Flüssigkeitskühlung unter Druck stehendes Kühlöl umfassen, das zwischen jenes Isolierelement und den Ventilschaft geleitet wird.

9. Anordnung nach einem der vorhergehenden Ansprüche, worin der gegossene keramische Körper Gesamtabmessungen von Höhe/Breite/Länge im Verhältnisbereich von 1:1:1 bis 1:3:10 aufweist.

## Revendications

1. Un ensemble de culasse pour un moteur à combustion interne ayant un bloc-cylindre (11) avec des parois définissant un ou plusieurs alésages (12) dans chacun desquels va et vient un piston (13), ledit ensemble comprenant; un corps (16) ayant une paroi latérale (20) et un autre montage de paroi sur ledit bloc-cylindre pour délimiter, avec ledit piston et le bloc-cylindre, une chambre de combustion (17), ledit corps céramique (16) ayant un passage (18) ménagé à travers ledit corps pour l'écoulement des gaz de combustion d'admission et des gaz d'échappement comprimés entre ladite chambre de combustion et ladite paroi latérale du corps, un carter (15) serrant, de façon étanche, ledit corps céramique sur ledit bloc-cylindre et des moyens de transport (33) pouvant être supportés, s'étendant dans ledit corps (16) pour contrôler l'écoulement des gaz à travers ledit corps, ledit carter supportant au moins une partie de la charge de compression imposée par ledit serrage, caractérisé en ce que ledit corps est un corps en céramique moulée (16) constitué d'un matériau ayant un coefficient d'expansion thermique inférieur à $1,8\times10^{-6}$ cm/cm/°C ($1,0\times10^{-6}$ pce/pce/°F) et dans lequel un ou plusieurs éléments d'absorption (22) de matériau d'étanchéité résistant aux hautes températures, sont disposés entre ledit carter (15) et le corps (16) pour s'adapter à une différence dans le coefficient d'expansion thermique allant de 1,8 à $21,6\times10^{-6}$ cm/cm/°C (1 à $12\times10^{-6}$ pce/pce/°F).

2. Un ensemble selon la revendication 1, dans lequel ledit corps céramique est constitué d'un aluminosilicate de lithium.

3. Un ensemble selon la revendication 1 ou 2, dans lequel ledit carter est constitué d'éléments métalliques entourant ledit corps.

4. Un ensemble selon l'une quelconque des revendications 1 à 3, dans lequel la petite dimension transversale du corps céramique moulé n'est pas inférieure à 5,08 cm (2 pouces).

5. Un ensemble selon l'une quelconque des revendications précédentes, dans lequel lesdits moyens pour contrôler l'écoulement des gaz à travers ledit corps comprennent des sous-ensembles de soupapes supportés sur ledit carter.

6. Un ensemble selon la revendication 5, dans lequel ledit corps présente une paroi délimitant un espace pour la précombustion des gaz d'admission, lesdits moyens pour contrôler l'écoulement des gaz à travers ledit corps comportant en outre un dispositif de précombustion s'étendant à travers ledit carter dans ledit corps et vers ladite paroi délimitant ledit espace de précombustion.

7. Un ensemble selon la revendication 6, qui comporte en outre, un élément d'isolant céramique monté entre ledit corps et une partie des moyens pour contrôler l'écoulement des gaz à travers le corps, et des moyens pour refroidir à l'aide d'un fluide ledit élément isolant céramique.

8. Un ensemble selon la revendication 7, dans lequel ladite partie des moyens pour contrôler l'écoulement des gaz comprend une tige de soupape et lesdits moyens pour refroidir à l'aide d'un fluide comprennent une huile de refroidissement sous pression dirigée entre ledit élément isolant et ladite tige de soupape.

9. Un ensemble selon l'une quelconque des revendications précédentes, dans lequel ledit corps céramique moulé a des dimensions hors tout de hauteur/largeur/longueur dans la plage des rapports allant de 1:1:1 à 1:3:10.

EP 0 167 528 B1